# EUROPEAN PATENT SPECIFICATION

(11) **EP 3 556 555 B1**
(45) Date of publication and mention of the grant of the patent: **21.10.2020**
(21) Application number: 17880550.3
(22) Date of filing: 14.12.2017
(51) Int. Cl.: B32B 27/30, B32B 27/34, B32B 27/08, B32B 27/32, C08J 5/18

(54) **MULTILAYER STRUCTURE**
MEHRSCHICHTIGE STRUKTUR
STRUCTURE MULTICOUCHE

(30) Priority: 14.12.2016 US 201662433970 P
(43) Date of publication of application: 23.10.2019
(73) Proprietor: Mitsubishi Chemical Corporation, Tokyo 100-8251 (JP)
(72) Inventor: NAKASHIMA Ayano, Chiyoda-ku Tokyo 1008251 (JP); MATSUMURA Yoshitaka, Chiyoda Tokyo 1008251 (JP); OPACICH, Michael L., Arlington Heights, Illinois 60004 (US)
(74) Representative: Kuhnen & Wacker Patent- und Rechtsanwaltsbüro PartG mbB
(86) International application number: PCT/JP2017/044877
(87) International publication number: WO 2018/110639

(56) References cited:
- WO-A1-2005/072962
- WO-A1-2007/037291
- WO-A1-2013/068809
- JP-A- H04 115 926
- JP-A- H04 164 641
- JP-A- H04 296 549
- JP-A- 2004 351 668
- JP-A- 2006 192 592
- JP-A- 2012 122 066
- JP-A- 2014 213 595
- JP-A- 2015 104 830
- US-A1- 2007 042 206

## Description

### Technical Field

The present invention relates to a multilayer structure including a semi-aromatic polyamide layer, an ethylene-vinyl alcohol copolymer layer and a thermoplastic resin layer, and more specifically to a multilayer structure capable of preventing a curling phenomenon, having a high gas barrier property after heat sterilization treatment and quick recovery of the gas barrier property after the heat sterilization treatment, and thus easy to laminate, to be subjected to bag making processing and to be filled with contents, a coextruded multilayer structure, and a coextruded multilayer structure for use in heat sterilization treatment.

### Background Art

In an ethylene-vinyl alcohol copolymer (hereinafter sometimes referred to as EVOH resin) exhibits excellent a gas barrier property including oxygen barrier property, in which hydroxyl groups contained in the molecular chain are strongly hydrogen bonded to form a crystallized portion, and the oxygen from outside is prevented from entering the crystallized portion. Taking advantage of such properties, the EVOH resin is molded into a film or sheet such as a food packaging material, a pharmaceutical packaging material, an industrial chemical packaging material and an agricultural chemical packaging material, or a packaging container such as a bottle, and is used.

However, since the EVOH resin has insufficient physical strength, the EVOH resin is rarely used alone and is laminated with other resins so as to be used as a single layer of a multilayer structure.

In molding the EVOH resin, melt molding is usually performed and the EVOH resin is formed and processed into a film, sheet, bottle, cup, tube, pipe, or other shapes. For lamination with other resins, multilayering by co-extrusion is preferred because of the high degree of freedom of the layer structure and the high production efficiency.

Further, in order to improve safety in food packaging and pharmaceutical packaging, heat sterilization treatment is increasingly performed after packaging contents for the purpose of sterilizing microorganisms causing decay of the contents, and barrier packaging materials having an EVOH resin layer are sometimes subjected to heat sterilization treatment.

However, since the EVOH resin layer contains a large amount of moisture during the heat sterilization treatment, the barrier property immediately after the heat sterilization treatment greatly deteriorates.

The barrier property of the EVOH resin layer gradually recovers after the heat sterilization treatment and in order to improve the recovery speed, Patent Document 1 proposes to laminate an outermost layer having high moisture permeability such as a polyamide resin layer with an EVOH resin layer. In addition, Patent Document 2 proposes a packaging material including a polyamide resin layer and an EVOH resin layer having an excellent gas barrier property immediately after heat sterilization treatment, using a semi-aromatic polyamide, as a polyamide resin, having a relatively high barrier property even in a high humidity state immediately after the heat sterilization treatment.

### Prior Art Document

### Patent Document

Patent Document 1: JP-A-H1-253442
Patent Document 2: JP-A-2004-351769

JPH04164641 discloses a multi-layer stretched film characterised by curl.

### Summary of Invention

### Problems that the Invention is to Solve

However, when using a multilayer structure formed by multilayering by a co-extrusion method as a packaging material, usually, a polyolefin resin excellent in heat sealability is often used as the innermost layer, i.e., a sealant layer. In a case where the outermost layer is a polyamide resin layer and the innermost layer is a polyolefin resin layer, the layer structure is not symmetrical and the physical properties of the polyolefin resin and the polyamide resin are greatly different. Consequently, such a multilayer structure causes a curling phenomenon rounding in one direction. When the curling phenomenon is strong, the shape of the multilayer structure may not be determined when laminating the multilayer structure with a base material, processing the same into a packaging material, or filling the packaging material with contents, which may cause troubles.

The present invention has been made in view of the above circumstances, and an object of the present invention is to provide a multilayer structure having a slight curling phenomenon, a relatively high barrier property immediately after heat sterilization treatment and quick recovery of the gas barrier property.

### Means for Solving the Problems

As a result of intensive studies in a multilayer structure including an EVOH resin layer, the present inventors have found that a multilayer structure, including a semi-aromatic polyamide layer (A) which is a layer containing a semi-aromatic polyamide, an ethylene-vinyl alcohol copolymer layer (B) (hereinafter referred to as EVOH resin layer (B)) which is a layer containing an ethylene-vinyl alcohol copolymer, and a thermoplastic resin layer (C) between the semi-aromatic polyamide layer (A) and the EVOH resin layer (B), which is a layer containing a thermoplastic resin other than the semi-aromatic polyamide and the ethylene-vinyl alcohol copolymer, can be obtained, which has a slight curling phenomenon, an excellent gas barrier property immediately after heat sterilization treatment and quick recovery of the gas barrier property. The present invention has been thus completed.

Namely, the gist of the present invention lies in the following (1) to (12).
[1) A packaging material being configured to store a content therein and having the shape of a stand-up pouch, the packaging material comprising a multilayer structure, the multilayer structure comprising: a semi-aromatic polyamide layer (A); an ethylene-vinyl alcohol copolymer layer (B); and a thermoplastic resin layer (C) between the semi-aromatic polyamide layer (A) and the ethylene-vinyl alcohol copolymer layer (B), the thermoplastic resin layer (C) containing a thermoplastic resin other than a semi-aromatic polyamide and an ethylene-vinyl alcohol copolymer, wherein the ethylene content in the ethylene-vinyl alcohol copolymer is 20 mol% to 60 mol%, measured according to ISO 14663; wherein the saponification degree of the vinyl ester component in the ethylene-vinyl alcohol copolymer is 90 mol% to 100 mol%, measured according to JIS K6726, wherein the ethylene-vinyl alcohol copolymer is a solution uniformly dissolved in a water/methanol solvent having a weight ratio water: methanol of 9:1; and wherein the total thickness of the entire multilayer structure is 10 pm to 500 pm.
(2) The packaging material according to (1), wherein the thermoplastic resin layer (C) is a resin layer of an aliphatic polyamide.
(3) The packaging material according to (1) or (2), further comprising an aliphatic polyamide layer (D) different from the thermoplastic resin layer (C), wherein the EVOH resin layer (B) and the aliphatic polyamide layer (D) are adjacent to each other.
(4) The packaging material according to (3), wherein the aliphatic polyamide layer (D) is an outermost layer.
(5) The packaging material according to (4), wherein the aliphatic polyamide layer (D), the EVOH resin layer (B), the thermoplastic resin layer (C), and the semi-aromatic polyamide layer (A) are successively laminated resulting in the multi-layer structure comprising the structure D/B/C/A.
(6) The packaging material according to any one of (1) to (5), further comprising a polyolefin resin layer (E), wherein the polyolefin resin layer (E) is the outermost layer.
(7) The packaging material according to any one of (1) to (6), wherein the multilayer structure is a coextruded multilayer structure.
(8) The packaging material according to any one of (1) to (7), wherein the multilayer structure is for use in heat sterilization treatment with hot water performed at 60 °C to 150 °C for 1 minute to 150 minutes.
(9) The packaging material according to (9), further comprising a polyolefin resin layer (E) as an innermost layer in contact with the content.
(10) The packaging material according to (9) or (10), wherein the semi-aromatic polyamide layer (A) is a layer closer to the content than the ethylene-vinyl alcohol copolymer layer (B).
(11) Use of the packaging material according to any one of claims 1 to 10 as a packaging material for heat sterilization treatment with hot water performed at 60°C to 150°C for 1 minute to 150 minutes. (12) Use of a multilayer structure as a stand-up pouch, the multilayer structure comprising: a semi-aromatic polyamide layer (A); an ethylene-vinyl alcohol copolymer layer (B); and a thermoplastic resin layer (C) between the semi-aromatic polyamide layer (A) and the ethylene-vinyl alcohol copolymer layer (B), the thermoplastic resin layer (C) containing a thermoplastic resin other than a semi-aromatic polyamide and an ethylene-vinyl alcohol copolymer, 5 wherein the ethylene content in the ethylene-vinyl alcohol copolymer is 20 mol% to 60 mol%, measured according to ISO 14663; wherein the saponification degree of the vinyl ester component in the ethylene-vinyl alcohol copolymer is 90 mol% to 100 mol%, measured according to JIS K6726, wherein the ethylene-vinyl alcohol copolymer is a solution uniformly dissolved in a water / methanol solvent having a weight ratio water: methanol of 9:1; and wherein the total thickness of the entire multilayer structure is 10 pm to 500 pm.

### Effects of the Invention

The multilayer structure according to the present invention includes the semi-aromatic polyamide layer (A), the EVOH resin layer (B), and the thermoplastic resin layer (C) between the semi-aromatic polyamide layer (A) and the EVOH resin layer (B), the thermoplastic resin layer (C) containing thermoplastic resin other than the semi-aromatic polyamide and the EVOH resin. Therefore, a multilayer structure can be obtained, which has a slight curling phenomenon, an excellent gas barrier property immediately after heat sterilization treatment and quick recovery of the gas barrier property, and is thus easy to laminate, to be subjected to bag making processing and to be filled with contents.

### Description of Embodiments

In the present invention, a side on which contents are stored when the multilayer structure is processed into a packaging material, that is, a sealant side is referred to as "inner side", and the opposite side is referred to as "outer side". In addition, when the multilayer structure is processed into a packaging material, a layer on the innermost side is referred to as the "innermost layer" and a layer on the outermost side is referred to as the "outermost layer".

The multilayer structure according to the present invention includes: a semi-aromatic polyamide layer (A); an EVOH resin layer (B); and a thermoplastic resin layer (C) between the semi-aromatic polyamide layer (A) and the EVOH resin layer (B), the thermoplastic resin layer (C) containing a thermoplastic resin other than a semi-aromatic polyamide and an EVOH resin. First, each layer will be explained.

### <Semi-aromatic Polyamide Layer (A)>

The semi-aromatic polyamide layer (A) of the present embodiment is a layer containing a semi-aromatic polyamide as a main component. Here, "as a main component" means that the semi-aromatic polyamide is contained in an amount of 50 wt% or more and preferably 80 wt% to 100 wt% in the semi-aromatic polyamide layer (A).

The semi-aromatic polyamide is a polyamide with a structural unit having an aromatic ring in the main chain, and examples of the structural unit having an aromatic ring include aromatic diamines such as metaxylylenediamine and paraxylylenediamine, structural units derived from aromatic dicarboxylic acids such as terephthalic acid and isophthalic acid.

The proportion of the number of the structural unit having an aromatic ring in the main chain (that is, a monomer unit having an aromatic ring in the main chain) in the total number of all structural units (that is, all monomer units) constituting the semi-aromatic polyamide is usually 20% to 80%, and preferably 30% to 70%.

Specific examples of the semi-aromatic polyamide include polyhexamethylene terephthalamide (polyamide 6T), polynonamethylene terephthalamide (polyamide 9T), polyhexamethylene terephthalamide/polyhexamethylene isophthalamide copolymer (polyamide 6IT), polymetaxylylene adipamide (polyamide MXD6), isophthalic acid copolymerized polymethaxylylene adipamide (polyamide MXD6I), polymethaxylylene sebacamide (polyamide MXD10), polymethaxylylene dodecanamide (polyamide MXD12), poly-para-xylylene sebacamide (polyamide PXD10). These can be used alone or in combination of two or more. Among these, more preferred are polymethacrylene adipamide, isophthalic acid copolymerized polymetaxylylene adipamide, and polyhexamethylene terephthalamide/polyhexamethylene isophthalamide copolymer. Polymetaxylene adipamide (polyamide MXD6) is preferred because it is excellent in melt moldability, moisture resistance, and gas barrier property under high humidity.

### (EVOH Resin Layer (B))

The EVOH resin layer (B) of the present embodiment is a layer containing an EVOH resin as a main component. Here, "as a main component" means that the EVOH resin is contained in an amount of 50 wt% or more and preferably 80 wt% to 100 wt% in the EVOH resin layer (B).

The EVOH resin is usually a resin obtained by saponifying a copolymer of ethylene and a vinyl ester monomer (ethylene-vinyl ester copolymer), and is a water-insoluble thermoplastic resin called an ethylene-vinyl alcohol copolymer or a saponified ethylene-vinyl ester copolymer. Polymerization can be performed by any known polymerization method such as solution polymerization, suspension polymerization and emulsion polymerization, and solution polymerization using a lower alcohol such as methanol as a solvent is generally used. Saponification of the obtained ethylene-vinyl ester copolymer can also be performed by a known method. The EVOH resin thus produced mainly contains an ethylene-derived structural unit and a vinyl alcohol structural unit, usually with a small amount of a vinyl ester structural unit remaining without being saponified.

Vinyl acetate is typically used as the above vinyl ester monomer from the viewpoint of ease of availability from the market and good impurity treatment efficiency in production. Examples of other vinyl ester monomers include aliphatic vinyl esters such as vinyl formate, vinyl propionate, vinyl valerate, vinyl butyrate, vinyl isobutyrate, vinyl pivalate, vinyl caprate, vinyl laurate, vinyl stearate and vinyl versatate, aromatic vinyl esters such as vinyl benzoate. Aliphatic vinyl esters having usually 3 to 20 carbon atoms, preferably 4 to 10 carbon atoms, and particularly preferably 4 to 7 carbon atoms can be used. These are usually used alone, and if necessary, plural types thereof may be used at the same time.

The ethylene content in the EVOH resin is a value measured according to ISO 14663, and is preferably 20 mol% to 60 mol%, more preferably 23mol% to 50 mol%, and particularly preferably 25 mol% to 48 mol%. In a case where the content is too low, the gas barrier property under high humidity and the melt moldability tend to be lowered. Conversely, in a case where the content is too high, the gas barrier property tends to be lowered.

The saponification degree of the vinyl ester component in the EVOH resin is a value measured according to JIS K6726 (wherein the EVOH resin is a solution uniformly dissolved in a water/methanol solvent (water: methanol = 9:1 (weight ratio)), and is preferably 90 mol% to 100 mol%, more preferably 95 mol% to 100 mol%, and particularly preferably 99 mol% to 100 mol%. In a case where the saponification degree is too low, the gas barrier property, thermal stability, moisture resistance tend to be lowered.

In addition, a melt flow rate (MFR) (under 210°C and a load of 2,160 g) of the EVOH resin is preferably 0.5 g/10 min to 100 g/10 min, more preferably 1 g/10 min to 50 g/10 min, and particularly preferably 2 g/10 min to 35 g/10 min. In a case where the MFR is too large, the film formability tends to be lowered, and in a case where the MFR is too small, the melt viscosity tends to be too high and melt extrusion tends to be difficult.

The EVOH resin used in the present embodiment may further contain structural units derived from the following comonomers, in addition to the ethylene structural units and the vinyl alcohol structural units (containing unsaponified vinyl ester structural units). Examples of the comonomer includes: olefins such as propylene, 1-butene and isobutene, and hydroxy group-containing α-olefins such as 2-propen-1-ol, 3-buten-1-ol, 4-penten-1-ol, 5-hexen-1-ol, 3,4-dihydroxy-1-butene and 5-hexene-1,2-diol, or a derivative thereof such as 3,4-diacyloxy-1-butene (particularly, 3,4-diacetoxy-1-butene) which are esterified products, 2,3 -diacetoxy-1 -allyloxypropane, 2-acetoxy-1-allyloxy-3-hydroxypropane, 3-acetoxy-1-allyloxy-2-hydroxypropane, glycerin monovinyl ether and glycerin monoisopropenyl ether, which are acylated products; hydroxyalkylvinylidenes such as 2-methylenepropane-1,3-diol and 3-methylenepentane-1,5-diol; vinylidene diacetates such as 1,3-diacetoxy-2-methylene propane, 1,3-dipropionyloxy-2-methylenepropane and 1,3-dibutylonyloxy-2-methylenepropane, which are esterified products; unsaturated acids such as acrylic acid, methacrylic acid, crotonic acid, phthalic acid (anhydride), maleic acid (anhydride) and itaconic acid (anhydride), a salt thereof, or mono- or di-alkyl esters thereof having a carbon number of 1 to 18; acrylamides such as acrylamide, N-alkylacrylamide having a carbon number of 1 to 18, N,N-dimethylacrylamide, 2-acrylamidopropanesulfonic acid or a salt thereof, and acrylamidopropyldimethylamine or an acid salt thereof, or a quaternary salt thereof; methacrylamides such as methacrylamide, N-alkylmethacrylamide having a carbon number of 1 to 18, N,N-dimethylmethacrylamide, 2-methacrylamidopropanesulfonic acid or a salt thereof, and methacrylamidopropyldimethylamine, an acid salt thereof, or a quaternary salt thereof; N-vinylamides such as N-vinylpyrrolidone, N-vinylformamide and N-vinylacetamide; vinyl cyanides such as acrylonitrile and methacrylonitrile; vinyl ethers such as alkyl vinyl ether having a carbon number of 1 to 18, hydroxyalkyl vinyl ether and alkoxyalkyl vinyl ether; vinyl halide compounds such as vinyl chloride, vinylidene chloride, vinyl fluoride, vinylidene fluoride and vinyl bromide; vinylsilanes such as trimethoxyvinylsilane; allyl halide compounds such as allyl acetate and allyl chloride; allyl alcohols such as allyl alcohol and dimethoxyallyl alcohol; and a comonomer such as trimethyl-(3-acrylamide-3-dimethylpropyl)-ammonium chloride and acrylamide-2-methylpropanesulfonic acid. These can be used alone or in combination of two or more.

Further, a "modified" EVOH resin such as an urethaned EVOH resin, an acetylated EVOH resin, a cyanoethylated EVOH resin, and an oxyalkylenated EVOH resin can be used.

Among the above modified products, the EVOH resin in which a primary hydroxyl group is introduced into the side chain by copolymerization is preferred from the viewpoint of improving the secondary moldability such as stretching treatment and vacuum/pressure forming. Among these, an EVOH resin having a 1,2-diol structure in the side chain is preferred.

The EVOH resin layer (B) contains an EVOH resin composition containing an EVOH resin, and the EVOH resin composition used in the present embodiment may contain a compounding agent generally incorporated in the EVOH resin composition within the range not inhibiting the effect of the present invention, such as a thermal stabilizer, an antioxidant, an antistatic agent, a colorant, an ultraviolet absorber, a lubricant, a plasticizer, a light stabilizer, a surfactant, an antibacterial agent, a desiccant, an anti-blocking agent, a flame retardant, a crosslinking agent, a curing agent, a foaming agent, a crystal nucleating agent, an antifogging agent, an additive for biodegradation, a silane coupling agent, and an oxygen absorbent.

The thermal stabilizer is a compound compounded for the purpose of improving various physical properties such as thermal stability during melt molding, and examples thereof include: organic acids such as acetic acid, propionic acid, butyric acid, lauric acid, stearic acid, oleic acid, and behenic acid, or salts thereof, such as alkali metal (sodium, potassium and the like) salts , alkaline earth metal (calcium, magnesium) salts, and zinc salts; or inorganic acids such as sulfuric acid, sulfurous acid, carbonic acid, phosphoric acid, and boric acid, or salts thereof, such as alkali metal (sodium, potassium ) salts, alkaline earth metal (calcium, magnesium) salts, and zinc salts.

In addition, the EVOH resin used in the present embodiment may be a mixture with another EVOH resin. Examples of another EVOH resin include those having different ethylene contents, those having different degrees of saponification, those having different melt flow rates (MFR) (under 210°C and a load of 2,160 g), those having different copolymerization components, and those having different amounts of modification (for example, those different contents of a 1,2-diol structural unit).

In a case of being used as a multilayer structure for packaging a package to be heat sterilized by hot water such as a retort food, the EVOH resin layer (B) may preferably contain an EVOH resin composition containing a polyamide resin. The polyamide resin can form a network structure by an amide bond interacting with a hydroxyl group and/or an ester group of the EVOH resin, and accordingly, the elution of the EVOH resin during heat sterilization treatment can be prevented.

Known resins can be used as the polyamide resin. For example, the semi-aromatic polyamides same as those mentioned above and the aliphatic polyamide to be described later can be used. The aliphatic polyamide is preferred from the viewpoint of preventing poor appearance such as whitening of the EVOH resin layer (B) after heat sterilization treatment, polyamide 6, polyamide 66, and polyamide 6-66 are more preferred, and polyamide 6 is particularly preferred. The polyamide is preferably an end-capped polyamide in which the terminal carboxylic acid is esterified, from the viewpoint of improving melt processability of the EVOH resin layer (B).

The content of the polyamide resin is preferably 1 wt% to 40 wt%, more preferably 5 wt% to 35 wt%, and particularly preferably 7 wt% to 30 wt%, based on the entire EVOH resin composition. When the content is less than 1 wt%, it tends to be difficult to sufficiently prevent the elution of the EVOH resin, and when the content is more than 40 wt%, the melt processability of the EVOH resin layer (B) tends to be lowered.

### <Thermoplastic Resin Layer (C)>

The thermoplastic resin layer (C) is a layer containing a thermoplastic resin other than the semi-aromatic polyamide and the EVOH resin, as a main component. Here, "as a main component" means that the thermoplastic resin layer (C) contains the thermoplastic resin other than the semi-aromatic polyamide and the EVOH resin in an amount of 50 wt% or more, and preferably 80 wt% to 100 wt%.

Examples of the thermoplastic resin include: polyethylene resins such as a linear low-density polyethylene, a low-density polyethylene, a medium-density polyethylene, a high-density polyethylene, an ionomer, an ethylene-propylene copolymer, and an ethylene-α-olefin (a-olefin having 4 to 20 carbon atoms) copolymer; polypropylene resins such as an ethylene-acrylate copolymer polypropylene and a propylene-α-olefin (a-olefin having 4 to 20 carbon atoms) copolymer; polyolefin resins such as polybutene, polypentene and polycyclic olefin; polyamides resins such as aliphatic polyamides such as polycapramide (polyamide 6), poly-co-aminoheptanoic acid (polyamide 7), poly-co-aminononanoic acid (polyamide 9), polyundecanamide (polyamide 11), poly lauryl lactam (polyamide 12), and polyethylenediamine adipamide (polyamide 26), polytetramethylene adipamide (polyamide 46), polyhexamethylene adipamide (polyamide 66), polyhexamethylene sebacamide (polyamide 610), polyhexamethylene dodecamide (polyamide 612), polyoctamethylene adipamide (polyamide 86), polydecamethylene adipamide (polyamide 108), a caprolactam/lauryllactam copolymer (polyamide 6/12), a caprolactam/co-aminononanoic acid copolymer (polyamide 6/9), a caprolactam/hexamethylene diammonium adipate copolymer (polyamide 6/66), a lauryllactam/hexamethylenediammonium adipate copolymer (polyamide 12/66), an ethylenediamine adipamide/hexamethylene diammonium adipate copolymer (polyamide 26/66), a caprolactam/hexamethylene diammonium adipate/hexamethylene diammonium sebacate copolymer (polyamide 66/610), and an ethylene ammonium adipate/hexamethylene diammonium adipate/hexamethylene diammonium sebacate copolymer (polyamide 6/66/610), aromatic polyamides such as poly-P-phenylene terephthalamide and poly-p-phenylene-3-4'-diphenyl ether terephthalamide, and amorphous polyamides; polystyrene resins; polyester resins such as polyethylene terephthalate and polybutylene terephthalate; halogen type resins such as polyvinyl chloride, polyvinylidene chloride, chlorinated polyethylene, and chlorinated polypropylene; acrylic resins such as polymethyl methacrylate; and elastomers such as a polyester elastomer and a polyurethane elastomer. These can be used alone or in combination of two or more. Among these, it is preferable to use a polyamide resin, more preferably an aliphatic polyamide, and particularly preferably polycapramide (polyamide 6), from the viewpoint of further weakening the curling phenomenon of the multilayer structure.

### <Aliphatic Polyamide Layer (D)>

The multilayer structure of the present embodiment preferably includes an aliphatic polyamide layer (D) different from the thermoplastic resin layer (C). The aliphatic polyamide layer (D) of the present embodiment is a layer containing an aliphatic polyamide as a main component. Here, "as a main component" means that the aliphatic polyamide is contained in an amount of 50 wt% or more and preferably 80 wt% to 100 wt% in the aliphatic polyamide layer (D).

The aliphatic polyamide is a polyamide containing, as a main component, structural units containing no aromatic ring in the main chain and containing an aliphatic hydrocarbon chain. Here, "as a main component" means that the structural units containing no aromatic ring are 80 mol% or more, preferably 90 mol% to 100 mol% of the structural units of the aliphatic polyamide. In addition, the aliphatic hydrocarbon chain preferably has 5 or more carbon atoms. The proportion of the number of structural units containing an aliphatic hydrocarbon chain having 5 or more carbon atoms in the main chain (that is, a monomer unit having an aliphatic hydrocarbon chain having 5 or more carbon atoms in the main chain) in the total number of the structural units (that is, all monomer units) is usually 60% or more, and preferably 80% to 100%.

In the aliphatic polyamide contained in the aliphatic polyamide layer (D), in addition to the above, a structural unit containing an aliphatic hydrocarbon chain having less than 5 carbon atoms in the main chain between amide bonds can also be used, for example. Examples of the structural unit containing an aliphatic hydrocarbon chain having less than 5 carbon atoms include structural units derived from carboxylic acids such as succinic acid, glutaric acid, and adipic acid, and structural units derived from diamines such as methylenediamine and ethylenediamine. In a case where such a structural unit is contained, the proportion of the number of structural units containing an aliphatic hydrocarbon chain having less than 5 carbon atoms in the main chain (that is, a monomer unit having an aliphatic hydrocarbon chain having less than 5 carbon atoms in the main chain) in the total number of the structural units constituting the aliphatic polyamide (that is, all monomer units) is usually 40% or less, and preferably 20% or less.

Specific examples of the aliphatic polyamide contained in the aliphatic polyamide layer (D) include homopolymers such as polycapramide (polyamide 6), poly-co-aminoheptanoic acid (polyamide 7), poly-co-aminononanoic acid (polyamide 9), polyundecanamide (polyamide 11), and poly lauryl lactam (polyamide 12). In addition, examples of the copolymerized polyamide resin include polyethylenediamine adipamide (polyamide 26), polytetramethylene adipamide (polyamide 46), polyhexamethylene adipamide (polyamide 66), polyhexamethylene sebacamide (polyamide 610), polyhexamethylene dodecamide (polyamide 612), polyoctamethylene adipamide (polyamide 86), polydecamethylene adipamide (polyamide 108), a caprolactam/lauryllactam copolymer (polyamide 6/12), a caprolactam/ω-aminononanoic acid copolymer (polyamide 6/9), a caprolactam/hexamethylene diammonium adipate copolymer (polyamide 6/66), a lauryllactam/hexamethylenediammonium adipate copolymer (polyamide 12/66), an ethylenediamine adipamide/hexamethylene diammonium adipate copolymer (polyamide 26/66), a caprolactam/hexamethylene diammonium adipate/hexamethylene diammonium sebacate copolymer (polyamide 66/610), and an ethylene ammonium adipate/hexamethylene diammonium adipate/hexamethylene diammonium sebacate copolymer (polyamide 6/66/610). These can be used alone or in combination of two or more. Among these, polycapramide (polyamide 6) and a caprolactam/hexamethylene diammonium adipate copolymer (polyamide 6/66) are preferred from the viewpoint of excellent melt moldability.

### <Polyolefin Resin Layer (E)>

The multilayer structure of the present embodiment preferably includes a polyolefin resin layer (E). The polyolefin resin layer (E) is a layer containing a polyolefin resin as a main component. Here, "as a main component" means that the polyolefin resin is contained in an amount of 50 wt% or more and preferably 80 wt% to 100 wt% in the polyolefin resin layer (E).

Examples of the polyolefin resin include: polyethylene resins such as an ultra-low-density polyethylene, a linear low-density polyethylene, a low-density polyethylene, a medium-density polyethylene, a high-density polyethylene, an ionomer, an ethylene-propylene copolymer, and an ethylene-α-olefin (a-olefin having 4 to 20 carbon atoms) copolymer; polypropylene resins such as an ethylene-acrylate ester copolymer polypropylene and a propylene-α-olefin (a-olefin having 4 to 20 carbon atoms) copolymer; polybutene; polypentene; and a polycyclic olefin. A polypropylene resin is preferred because it is excellent in heat sealability and heat resistance.

### <Multilayer Structure>

The multilayer structure of the present embodiment includes the semi-aromatic polyamide layer (A), the EVOH resin layer (B), and the thermoplastic resin layer (C) between the semi-aromatic polyamide layer (A) and the EVOH resin layer (B). Both the semi-aromatic polyamide and the EVOH resin are resins having high crystallinity among thermoplastic resins. In a case where the two layers are provided adjacent to each other, it is presumed that the layer crystallizes more quickly than other thermoplastic resin layers, distortion occurs between the layers, and the curling phenomenon easily occurs in the multilayer structure. On the other hand, when another thermoplastic resin layer having a slow crystallization rate is provided between the two layers, it is presumed that the strain generated by the crystallization of the semi-aromatic polyamide layer and the EVOH resin layer is absorbed or relaxed by the thermoplastic resin layer in an uncrystallized state, so that the curling phenomenon of the multilayer structure can be prevented.

The semi-aromatic polyamide layer (A) and the thermoplastic resin layer (C), the EVOH resin layer (B) and the thermoplastic resin layer (C) may be laminated adjacently to each other, or may have another resin layer to be described later therebetween. It is preferable that the semi-aromatic polyamide layer (A), the thermoplastic resin layer (C) and the EVOH resin layer (B) are adjacent one another. "Adjacent" means that the two layers are laminated in contact and substantially no intermediate layer is present.

The multilayer structure of the present embodiment includes an aliphatic polyamide layer (D) different from the thermoplastic resin layer (C), and it is preferable that the EVOH resin layer (B) and the aliphatic polyamide layer (D) are adjacent to each other since the barrier property of the multilayer structure immediately after heat sterilization is good. In a case where the thermoplastic resin layer (C) is a layer containing an aliphatic polyamide as a main component, the aliphatic polyamide of the thermoplastic resin layer (C) and the aliphatic polyamide of the aliphatic polyamide layer (D) may be the same or different from each other.

It is preferable that the aliphatic polyamide layer (D) is the outermost layer of the multilayer structure from the viewpoint of speeding up recovery of the barrier property of the multilayer structure after heat sterilization.

The semi-aromatic polyamide layer (A) is preferably a layer closer to the content than the EVOH resin layer (B) when the multilayer structure is processed into a packaging material for storing the content therein. It is preferable that the semi-aromatic polyamide layer (A) is located on the inner layer side of the EVOH resin layer (B) when the packaging material is formed using the multilayer structure of the present embodiment, since the barrier property of the multilayer structure immediately after heat sterilization is good.

It is preferable that the multilayer structure of the present embodiment further includes a polyolefin resin layer (E) such that the polyolefin resin layer (E) is the outermost layer. It is preferable that the polyolefin resin layer (E) is included as the outermost layer of the multilayer structure, since the heat sealability is excellent when the packaging material is processed in a manner of locating a polyolefin resin layer (E) of the multilayer structure on the inner side of the packaging material.

As the layer structure of the multilayer structure, for example, (D)/(B)/(C)/(A)/(E) are successively laminated from the outside, and an adhesive resin layer may be provided between (D) and (B), (B) and (C), (C) and (A), or (A) and (E). Typical examples of the adhesive resin include a modified polyolefin polymer containing a carboxyl group obtained by chemically bonding an unsaturated carboxylic acid or an anhydride thereof to a polyolefin resin by an addition reaction, a graft reaction. For example, maleic anhydride graft modified polyethylene, maleic anhydride graft modified polypropylene, a maleic anhydride graft modified ethylene-propylene (block and random) copolymer, a maleic anhydride graft modified ethylene-ethyl acrylate copolymer, a maleic anhydride graft modified ethylene-vinyl acetate copolymer, a maleic anhydride-modified polycyclic olefin resin, and a maleic anhydride graft modified polyolefin resin. One or a mixture of two or more selected from the above can be used.

As the thickness of each layer in the multilayer structure of the present embodiment, the thickness of the semi-aromatic polyamide layer (A) is preferably 1 µm to 50 µm, and particularly preferably 5 µm to 40 µm. The thickness of the EVOH resin layer (B) is preferably 1 µm to 50 µm, and particularly preferably 5 µm to 40 µm. When the thickness is within the above range, the effect of the present invention tends to be more effectively obtained.

The thickness of the thermoplastic resin layer (C) is preferably 1 µm to 40 µm, and particularly preferably 5 µm to 35 µm. When the above thickness is too small, the curl preventing effect tends to decrease, and when the above thickness is too large, the rigidity tends to be too large.

In the case of including the aliphatic polyamide layer (D), the thickness of the aliphatic polyamide layer (D) is preferably 1 µm to 50 µm, and particularly preferably 5 µm to 40 µm. In the case of including the polyolefin resin layer (E), the thickness of the polyolefin resin layer (E) is preferably 5 µm to 300 µm, particularly preferably 10 µm to 280 µm. When the thickness is within the above range, the effect of the present invention tends to be more effectively obtained.

The total thickness of the entire multilayer structure is preferably 10 µm to 500 µm, and particularly preferably 30 µm to 450 µm. When the thickness is within the above range, the effect of the present invention tends to be more effectively obtained.

The ratio of the thickness of the thermoplastic resin layer (C) to the total thickness of the entire multilayer structure (thermoplastic resin layer (C) / entire multilayer structure) is preferably 0.01 to 0.5, and particularly preferably 0.02 to 0.45. In a case where the above ratio is too small, the curl preventing effect tends to decrease, and in a case where the above ratio is too large, the rigidity tends to be too large.

The ratio of the thickness of the thermoplastic resin layer (C) to the thickness of the EVOH resin layer (B) (thermoplastic resin layer (C) / EVOH resin layer (B)) is preferably 0.1 to 2, and particularly preferably 0.5 to 1.5. In a case where the above ratio is too small, the curl preventing effect tends to decrease, and in a case where the above ratio is too large, the rigidity tends to be too large.

The ratio of the thickness of the semi-aromatic polyamide layer (A) to the thickness of the EVOH resin layer (B) (semi-aromatic polyamide layer (A) / EVOH resin layer (B)) is preferably 0.1 to 2, more preferably 0.5 to 1.5, and particularly preferably 0.8 to 1.2. When the above ratio is within the above range, the effect of the present invention tends to be more effectively obtained.

The ratio of the thickness of the thermoplastic resin layer (C) to the thickness of the semi-aromatic polyamide layer (A) (thermoplastic resin layer (C) / semi-aromatic polyamide layer (A)) is preferably 0.1 to 2, and particularly preferably 0.5 to 1.5. In a case where the above ratio is too small, the curl preventing effect tends to decrease, and in a case where the above ratio is too large, the rigidity tends to be too large.

In the case of including the aliphatic polyamide layer (D), the ratio of the thickness of the aliphatic polyamide layer (D) to the thickness of the EVOH resin layer (B) (aliphatic polyamide layer (D) / EVOH resin layer (B)) is preferably 0.1 to 2, and particularly preferably 0.5 to 1.5. When the above ratio is within the above range, the effect of the present invention tends to be more effectively obtained.

In the case of including the polyolefin resin layer (E), the ratio of the thickness of the polyolefin resin layer (E) to the thickness of the EVOH resin layer (B) (polyolefin resin layer (E) / EVOH resin layer (B)) is preferably 0.1 to 2, and particularly preferably 0.5 to 1.5. When the above ratio is within the above range, the effect of the present invention tends to be more effectively obtained.

In the case of including the adhesive resin layer, the ratio of the thickness of the adhesive resin layer to the thickness of the EVOH resin layer (B) (adhesive resin layer / EVOH resin layer (B)) is preferably 0.01 to 1, and particularly preferably 0.1 to 0.5. When the above ratio is within the above range, the effect of the present invention tends to be more effectively obtained.

The multilayer structure of the present embodiment may further include other resin layers in addition to the semi-aromatic polyamide layer (A), the EVOH resin layer (B), the thermoplastic resin layer (C), the aliphatic polyamide layer (D), the polyolefin resin layer (E), and the adhesive resin layer.

A known resin can be used as a resin constituting the other resin layers. Specific examples of such a resin include: polyester resins such as polyethylene terephthalate and polyethylene naphthalate, polyamide resins other than the above polyamide resins, polyaramide type resins, polycarbonate type resins, polyacetal resins, and fluorine resins.

The multilayer structure of the present embodiment can be produced by a known method such as an extrusion coating method, a co-extrusion method, and a lamination method. Among these, the co-extrusion method is preferred since the productivity is excellent and the effect of the present invention can be more effectively obtained. The co-extrusion method refers to a method of simultaneously extruding respective resins from a plurality of extruders, laminating the layers in a molten state in a feed block or a die, and extruding a laminated film or sheet from a die lip to obtain a multilayer structure, and it is excellent in that the thickness of each layer can be adjusted and the multilayer structure can be obtained at once. However, the resin laminated in the molten state shrinks during cooling and solidification, and since the shrinkage ratio varies depending on each resin, when different resins are laminated on the outer side and the inner side, shrinkage stress remains on one side and the curl tends to occur in the multilayer structure.

In the co-extrusion method, a flat die, a round die are used for molding. Examples of a method using the round die include an air cooling method and a water cooling method, and an inflation method which inflates a multilayer tube extruded from a round die and a deflation method which contracts the multilayer tube.

Before being used as a packaging material, the multilayer structure of the present embodiment may be laminated with a separately produced base material. The base material may be laminated on the outer side, the inner side, or both sides of the multilayer structure, but usually the base material is laminated on the outer side of the multilayer structure.

Film-like or sheet-like base materials can be used as the base material. For example, a film or sheet obtained from polyester resins such as polyethylene terephthalate and polyethylene naphthalate, various polyamide resins such as polyamide resins, polyaramid resins, polypropylene resins, polyethylene resins, polycarbonate resins, polyacetal resins, fluorine resins, and other tough resins, can be used. Among these, a polyester resin film or sheet obtained from a polyester resin is preferred.

As the above resin film or sheet, any of an unstretched film, a stretched film uniaxially or biaxially stretched, can be used.

The thickness of the base material may be any thickness as long as the strength, puncture resistance can be retained, and is preferably 5 µm to 40 µm, and particularly preferably 10 µm to 30 µm. When the thickness is too large, the cost tends to increase, and conversely, when the thickness is too small, the strength, puncture resistance tend to decrease.

Examples of a method of laminating the multilayer structure of the present embodiment and the base material include a method of melt extrusion lamination of the base material on the multilayer structure of the present embodiment, a method of melt extrusion lamination of the multilayer structure of the present embodiment on the base material, and a method of dry lamination of the multilayer structure of the present embodiment and the base material using a known adhesive such as an organic titanium compound, an isocyanate compound, a polyester compound, and a polyurethane compound. Dry lamination is often used in terms of high production efficiency.

In addition, a printing layer may be appropriately provided on the base material if necessary. The printing layer is formed by an ink containing a solvent, a binder resin such as a urethane binder resin, an acrylic binder resin, a nitrocellulose binder resin and a rubber binder resin, various pigments, extender pigments, a plasticizer, a desiccant, and a stabilizer. With the printing layer, characters, pictures can be formed. For example, known printing methods such as offset printing, gravure printing, flexo printing, silk screen printing, ink jet printing, laser printing, and digital printing can be used as a printing method. In addition, adhesion of the printing layer can be improved by subjecting the surface of the base material to corona treatment or ozone treatment in advance as pretreatment. Usually, the printing layer is provided on the inner surface of the base material.

### <Heat Sterilization Treatment>

The multilayer structure obtained by the present invention can be subjected to heat sterilization treatment with hot water. The heat sterilization treatment refers to a heat sterilization technique performed in the presence of known water such as retort treatment, boil treatment, and steam treatment. The conditions can be selected depending on the content to be filled, and it is usually performed at 60°C to 150°C usually for 1 minute to 150 minutes.

### <Application of Multilayer Structure>

The multilayer structure of the present embodiment can be suitably used as a packaging material for various packaging material containers and packaging films of, in addition to common foods, seasonings such as mayonnaise and dressings, fermented foods such as miso, fat and oil products such as salad oil, beverages, cosmetics, pharmaceuticals. The shape of the package can be any shape such as a bottle, a bag, a stand-up pouch, for example. A stand-up pouch is preferred since the multilayer structure of the present invention is excellent in preventing the curling phenomenon.

Since the multilayer structure of the present embodiment is excellent in gas barrier property after heat sterilization treatment, it is useful as a packaging material for performing heat sterilization treatment.

The multilayer structure of the present invention is particularly useful for a stand-up pouch for heat sterilization treatment.

The stand-up pouch refers to a self-supporting package. For example, a stand-up pouch including two body sheets and one bottom sheet is formed by piling the two body sheets to face to each other with the bottom sheet interposed between lower portions of the two body sheets, sealing the bottom and left and right sides, and opening a top portion, i.e., an upper portion. The content is filled from the opening, and degassing is performed if necessary. The opening portion is sealed, and whereby a stand-up pouch containing contents can be obtained.

The multilayer structure of the present invention may be used for at least a part of the body sheet and the bottom sheet used for the stand-up pouch. From the viewpoint of more effectively obtaining the effect of the present invention, a stand-up pouch using the multilayer structure of the present invention in all of the body sheets and the bottom sheet is most preferred.

A liquid is suitable as a content to be filled in the stand-up pouch. Besides those mentioned above, various foods and drinks such as cooked foods, fish-farming products, frozen foods, simmered foods, rice cakes, liquid soups, seasonings, and drinking water can be used. Specific examples thereof include liquid foods such as curry, stew, soup, meat sauce, hamburger, meatball, shumai, oden and porridge, jelly-like foods, seasonings, water and other various kinds of foods and drinks.

### Examples

### <Resin Materials>

Using the following resin materials, multilayer structures were prepared.
- Semi-aromatic polyamide layer (A): MX nylon S6011 (polymetaxylene adipamide) manufactured by Mitsubishi Gas Chemical Company, Inc.
- EVOH resin layer (B): resin having an ethylene content of 29 mol%, a saponification degree of 99.7 mol% and a MFR of 4 g/10 min (under 210°C and a load of 2,160 g), obtained by melt-kneading an ethylene-vinyl alcohol copolymer and polyamide 6 at 87.5/12.5 (weight ratio)
- Thermoplastic resin layer (C): UBE Nylon 1022B (polyamide 6) manufactured by UBE Industries, LTD.
- Aliphatic polyamide layer (D): UBE Nylon 1022B (polyamide 6) manufactured by UBE Industries, LTD.
- Polyolefin resin layer (E): Novatec PP BC5FA manufactured by Japan Polypropylene Corporation
- Adhesive resin layer: Plexar PX6002 manufactured by LyondellBasell

### <Preparation of Multilayer Structure>

Multilayer films having the layer structure shown in Table 1 were prepared using a 9-type 9-layer air-cooled inflation multilayer film molding machine manufactured by Sumitomo Heavy Industries Modern, Ltd.

By using the same resin material for a plurality of extruders in adjacent layers in order to adjust the number of layers and the layer thickness, adjacent resin layers of the same resin material can be produced as one layer in the multilayer structure.

The resin material of each layer was extruded under the following conditions to prepare a multilayer structure.

Semi-aromatic polyamide layer (A): 40 mm single screw extruder (barrel temperature: 260°C)
EVOH resin layer (B): 40 mm single screw extruder (barrel temperature: 220°C)
Thermoplastic resin layer (C): 40 mm single screw extruder (barrel temperature: 240°C)
Aliphatic polyamide layer (D): 40 mm single screw extruder (barrel temperature: 240°C)
Polyolefin resin layer (E): 40 mm single screw extruder (barrel temperature: 220°C)
Adhesive resin layer: 40 mm single screw extruder (barrel temperature: 210°C)
Die: stacking die (die temperature: 250°C)
Film folding width: 600 mm

### <Evaluation on Curling Phenomenon>

Each multilayer structure was cut at 210 mm in a TD direction (Transverse Direction) and 297 mm in an MD direction (Machine Direction), and when the multilayer structure was placed on the horizontal plane, the diameter of the cylinder of the multilayer structure formed by curls (curls having the surface on the polyolefin resin layer (E) side as the inside) in the TD direction was measured under the conditions of 23°C and 50% RH. It is determined that, the smaller the diameter, the stronger the curling phenomenon, and the larger the diameter, the weaker the curling phenomenon. When the diameter of the cylinder is less than 20 mm, it may obstruct lamination, bag making processing, filling contents and the like.

### <Gas Barrier Property Evaluation after Heat Sterilization Treatment>

The cut multilayer structure (150 mm in the TD direction and 190 mm in the MD direction) was subjected to heat sterilization treatment by hot water treatment at 120°C for 30 minutes using an immersion hot water treatment apparatus (manufactured by HISAKA Works, Ltd.).

2.5 hours after the heat sterilization treatment, using an oxygen permeability measuring apparatus ("Ox-tran 2/21" manufactured by Mocon Inc.), the change in oxygen permeability of the multilayer structure was measured under the conditions that the surface on the polyolefin resin layer (E) side was set at 23°C and 90% RH, and the surface on the side opposite to the polyolefin resin layer (E) was set at 23°C and 50% RH, and the oxygen permeability (cc/m²·day·atm) was measured 5 hours and 24 hours after the start of the measurement.

### [Example 1]

A multilayer structure, including an aliphatic polyamide layer (D) (20 µm), an EVOH resin layer (B) (20 µm), a thermoplastic resin layer (C) (15 µm), a semi-aromatic polyamide layer (A) (20 µm), an adhesive resin layer (5 µm), and a polyolefin resin layer (E) (20 µm) from the outside, was prepared under the above conditions, and the curling phenomenon and the gas barrier property after heat sterilization treatment were evaluated under the above conditions. The results are shown in Table 2.

### [Example 2, and Comparative Examples 1 and 2]

Multilayer structures were prepared in the same manner as in Example 1 except that the layer structure of each multilayer structure was changed to the description in Table 1, and the evaluations were performed. The results are shown in Table 2.

From the results in Table 2, it can be seen that in Examples 1 and 2 having multilayer structures including the thermoplastic resin layer (C) between the semi-aromatic polyamide layer (A) and the EVOH resin layer (B), the diameter of the cylinder formed by the curls of the multilayer structure is large and the curling phenomenon is prevented as compared with Comparative Examples 1 and 2 including no thermoplastic resin layer (C) between the semi-aromatic polyamide layer (A) and the EVOH resin layer (B). It can also be seen that in the multilayer structure of Example 1 having the aliphatic polyamide layer (D) as the outermost layer, the oxygen permeability after the heat sterilization treatment is low, the gas barrier property is high, and the recovery of the gas barrier property is quick.

**[Table 1]**

| Extruder No. | | 1 | 2 | 3 | 4 | 5 | 6 | 7 | 8 | 9 | Total thickness (µm) |
|---|---|---|---|---|---|---|---|---|---|---|---|
| Example 1 | Resin | (D) | (B) | (C) | | (A) | Adhesive resin laver | (E) | | | 100 |
| | Thickness (µm) | 20 | 20 | 15 | | 20 | 5 | 20 | | | |
| Example 2 | Resin | (A) | (C) | (B) | (D) | | Adhesive resin laver | (E) | | | 100 |
| | Thickness (µm) | 20 | 15 | 20 | 20 | | 5 | 20 | | | |
| Comparative Example 1 | Resin | (D) | (B) | (A) | | Adhesive resin layer | (E) | | | | 100 |
| | Thickness (µm) | 20 | 20 | 20 | | 5 | 35 | | | | |
| Comparative Example 2 | Resin | (A) | (B) | (D) | | | Adhesive resin layer | (E) | | | 100 |
| | Thickness (µm) | 20 | 20 | 20 | | | 5 | 35 | | | |

**[Table 2]**

| | Curling property of film | Oxygen permeability (cc/m²·day·atm) | |
|---|---|---|---|
| | TD direction | After 5 hours | After 24 hours |
| Example 1 | Diameter 34 mm | 7 | 0.7 |
| Example 2 | Diameter 24 mm | 18 | 2.6 |
| Comparative Example | Diameter 18 mm | - | - |
| Comparative Example 2 | Diameter 14 mm | 16 | 2.0 |

| | | | |
|---|---|---|---|
| "-" in the table represents unmeasured. | | | |

### Industrial Applicability

In the multilayer structure of the present invention, the curling phenomenon is prevented, the gas barrier property after the heat sterilization treatment is high, and the recovery of the gas barrier property is quick. Therefore, the multilayer structure is particularly suitable as a packaging material for foods, cosmetics, pharmaceuticals or the like to be heat sterilized.

## Claims

1. A packaging material being configured to store a content therein and having the shape of a stand-up pouch,
the packaging material comprising a multilayer structure,
the multilayer structure comprising:
a semi-aromatic polyamide layer (A);
an ethylene-vinyl alcohol copolymer layer (B); and
a thermoplastic resin layer (C) between the semi-aromatic polyamide layer (A) and the ethylene-vinyl alcohol copolymer layer (B), the thermoplastic resin layer (C) containing a thermoplastic resin other than a semi-aromatic polyamide and an ethylene-vinyl alcohol copolymer;
wherein the ethylene content in the ethylene-vinyl alcohol copolymer is 20 mol% to 60 mol%, measured according to ISO 14663;
wherein the saponification degree of the vinyl ester component in the ethylene-vinyl alcohol copolymer is 90 mol% to 100 mol%, measured according to JIS K6726, wherein the ethylene-vinyl alcohol copolymer is a solution uniformly dissolved in a water/methanol solvent having a weight ratio water: methanol of 9:1; and
wherein the total thickness of the entire multilayer structure is 10 µm to 500 µm.

2. The packaging material according to claim 1,
wherein the thermoplastic resin layer (C) is a resin layer of an aliphatic polyamide.

3. The packaging material according to claim 1 or 2, the multilayer structure further comprising:
an aliphatic polyamide layer (D) different from the thermoplastic resin layer (C),
wherein the ethylene-vinyl alcohol copolymer layer (B) and the aliphatic polyamide layer (D) are adjacent to each other.

4. The packaging material according to claim 3,
wherein the aliphatic polyamide layer (D) is an outermost layer.

5. The packaging material according to claim 4,
wherein the aliphatic polyamide layer (D), the ethylene-vinyl alcohol copolymer layer (B), the thermoplastic resin layer (C), and the semi-aromatic polyamide layer (A) are successively laminated, resulting in the multilayer structure comprising the structure (D)/(B)/(C)/(A).

6. The packaging material according to any one of claims 1 to 5, the multilayer structure further comprising:
a polyolefin resin layer (E),
wherein the polyolefin resin layer (E) is the outermost layer.

7. The packaging material according to any one of claims 1 to 6,
wherein the multilayer structure is a coextruded multilayer structure.

8. The packaging material according to any one of claims 1 to 7,
wherein the multilayer structure is for use in heat sterilization treatment with hot water performed at 60°C to 150°C for 1 minute to 150 minutes.

9. The packaging material according to any one of claims 1 to 8, further comprising:
a polyolefin resin layer (E) as an innermost layer in contact with the content.

10. The packaging material according to any one of claims 1 to 9,
wherein the semi-aromatic polyamide layer (A) is a layer closer to the content than the ethylene-vinyl alcohol copolymer layer (B).

11. Use of the packaging material according to any one of claims 1 to 10 as a packaging material for heat sterilization treatment with hot water performed at 60°C to 150°C for 1 minute to 150 minutes.

12. Use of a multilayer structure as a stand-up pouch,
the multilayer structure comprising:
a semi-aromatic polyamide layer (A);
an ethylene-vinyl alcohol copolymer layer (B); and
a thermoplastic resin layer (C) between the semi-aromatic polyamide layer (A) and the ethylene-vinyl alcohol copolymer layer (B), the thermoplastic resin layer (C) containing a thermoplastic resin other than a semi-aromatic polyamide and an ethylene-vinyl alcohol copolymer;
wherein the ethylene content in the ethylene-vinyl alcohol copolymer is 20 mol% to 60 mol%, measured according to ISO 14663;
wherein the saponification degree of the vinyl ester component in the ethylene-vinyl alcohol copolymer is 90 mol% to 100 mol%, measured according to JIS K6726, wherein the ethylene-vinyl alcohol copolymer is a solution uniformly dissolved in a water/methanol solvent having a weight ratio water: methanol of 9:1; and
wherein the total thickness of the entire multilayer structure is 10 µm to 500 µm.

## Patentansprüche

1. Verpackungsmaterial, das darauf ausgelegt ist, einen Inhalt darin zu lagern und die Form eines Standbeutels aufweist,
wobei das Verpackungsmaterial eine mehrlagige Struktur aufweist,
wobei die mehrlagige Struktur aufweist:
eine Schicht aus einem teilaromatischem Polyamid (A);
eine Schicht aus einem Ethylen-Vinyl-Alkoholcopolymer (B); und
eine Schicht aus thermoplastischem Harz (C) zwischen der Schicht aus teilaromatischem Polyamid (A) und der Schicht aus Ethylen-Vinyl-Alkoholcopolymer (B), wobei die Schicht aus thermoplastischem Harz (C) ein thermoplastisches Harz enthält, das sich von einem teilaromatischen Polyamid und einem Ethylen-Vinyl-Alkoholcopolymer unterscheidet;
wobei der Ethylen-Gehalt in dem Ethylen-Vinyl-Alkoholcopolymer 20 Molprozent bis 60 Molprozent beträgt, gemessen nach ISO 14663;
wobei der Verseifungsgrad des Vinylesterbestandteils in dem Ethylen-Vinyl-Alkoholcopolymer 90 Molprozent bis 100 Molprozent beträgt, gemessen nach JIS K6726, wobei das Ethylen-Vinyl-Alkoholcopolymer eine Lösung ist, die in einem Wasser/Methanol-Lösungsmittel mit einem Gewichtsverhältnis von Wasser zu Methanol von 9:1 einheitlich gelöst ist, und
wobei die Gesamtdicke der gesamten mehrlagigen Struktur 10 µm bis 500 µm beträgt.

2. Verpackungsmaterial nach Anspruch 1, wobei die Schicht aus thermoplastischem Harz (C) eine Harzschicht eines aliphatischen Polyamids ist.

3. Verpackungsmaterial nach Anspruch 1 oder 2, wobei die mehrlagige Struktur ferner aufweist:
eine Schicht aus einem aliphatischen Polyamid (D), die sich von der Schicht aus thermoplastischem Harz (C) unterscheidet, wobei die Schicht aus einem Ethylen-Vinyl-Alkoholcopolymer (B) und die Schicht aus einem aliphatischen Polyamid (D) zueinander benachbart angeordnet sind.

4. Verpackungsmaterial nach Anspruch 3, wobei die Schicht aus einem aliphatischen Polyamid (D) eine äußerste Schicht ist.

5. Verpackungsmaterial nach Anspruch 4, wobei die Schicht aus einem aliphatischen Polyamid (D), die Schicht aus einem Ethylen-Vinyl-Alkoholcopolymer (B), die Schicht aus thermoplastischem Harz (C) und die Schicht aus einem teilaromatischen Polyamid (A) sukzessive laminiert werden, was in der mehrlagigen Struktur resultiert, die die Struktur (D)/(B)/(C)/(A) aufweist.

6. Verpackungsmaterial nach einem der Ansprüche 1 bis 5, wobei die mehrlagige Struktur ferner aufweist:
eine Schicht aus einem Polyolefinharz (E),
wobei die Schicht aus einem Polyolefinharz (E) die äußerste Schicht ist.

7. Verpackungsmaterial nach einem der Ansprüche 1 bis 6, wobei die mehrlagige Struktur eine koextrudierte mehrlagige Struktur ist.

8. Verpackungsmaterial nach einem der Ansprüche 1 bis 7, wobei die mehrlagige Struktur zur Verwendung in einer Wärmesterilisierungsbehandlung mit heißem Wasser dient, die bei 60 °C bis 150 °C für eine Dauer zwischen 1 Minute und 150 Minuten durchgeführt wird.

9. Verpackungsmaterial nach einem der Ansprüche 1 bis 8, ferner aufweisend:
eine Schicht aus einem Polyolefinharz (E) als eine innerste Schicht, die mit dem Inhalt in Kontakt steht.

10. Verpackungsmaterial nach einem der Ansprüche 1 bis 9, wobei die Schicht aus einem teilaromatischen Polyamid (A) eine Schicht ist, die näher an dem Inhalt angeordnet ist als die Schicht aus einem Ethylen-Vinyl-Alkoholcopolymer (B).

11. Verwendung des Verpackungsmaterials nach einem der Ansprüche 1 bis 10 als ein Verpackungsmaterial für die Wärmesterilisierungsbehandlung mit heißem Wasser, die bei 60 °C bis 150 °C für eine Dauer zwischen 1 Minute und 150 Minuten durchgeführt wird.

12. Verwendung einer mehrlagigen Struktur als ein Standbeutel, wobei die mehrlagige Struktur aufweist:
eine Schicht aus einem teilaromatischem Polyamid (A);
eine Schicht aus einem Ethylen-Vinyl-Alkoholcopolymer (B); und
eine Schicht aus thermoplastischem Harz (C) zwischen der Schicht aus teilaromatischem Polyamid (A) und der Schicht aus Ethylen-Vinyl-Alkoholcopolymer (B), wobei die Schicht aus thermoplastischem Harz (C) ein thermoplastisches Harz enthält, das sich von einem teilaromatischen Polyamid und einem Ethylen-Vinyl-Alkoholcopolymer unterscheidet;
wobei der Ethylen-Gehalt in dem Ethylen-Vinyl-Alkoholcopolymer 20 Molprozent bis 60 Molprozent beträgt, gemessen nach ISO 14663;
wobei der Verseifungsgrad des Vinylesterbestandteils in dem Ethylen-Vinyl-Alkoholcopolymer 90 Molprozent bis 100 Molprozent beträgt, gemessen nach JIS K6726, wobei das Ethylen-Vinyl-Alkoholcopolymer eine Lösung ist, die in einem Wasser/Methanol-Lösungsmittel mit einem Gewichtsverhältnis von Wasser zu Methanol von 9:1 einheitlich gelöst ist, und
wobei die Gesamtdicke der gesamten mehrlagigen Struktur 10 µm bis 500 µm beträgt.

## Revendications

1. Matériau d'emballage étant configuré pour stocker un contenu dans celui-ci et présentant la forme d'un sachet tenant debout,
le matériau d'emballage comprenant une structure multicouche,
la structure multicouche comprenant :
une couche de polyamide semi-aromatique (A) ;
une couche de copolymère d'éthylène-alcool vinylique (B) ; et
une couche de résine thermoplastique (C) entre la couche de polyamide semi-aromatique (A) et la couche de copolymère d'éthylène-alcool vinylique (B), la couche de résine thermoplastique (C) contenant une résine thermoplastique autre qu'un polyamide semi-aromatique et qu'un copolymère d'éthylène-alcool vinylique ;
dans lequel la teneur en éthylène dans le copolymère d'éthylène-alcool vinylique est de 20 % en mole à 60 % en mole, mesurée conformément à ISO 14663 ;
dans lequel le degré de saponification du composant d'ester vinylique dans le copolymère d'éthylène-alcool vinylique est de 90 % en mole à 100 % en mole, mesuré conformément à JIS K6726, dans lequel le copolymère d'éthylène-alcool vinylique est une solution dissoute uniformément dans un solvant eau/méthanol présentant un rapport pondéral eau:méthanol de 9:1 ; et
dans lequel l'épaisseur totale de la structure multicouche entière est de 10 µm à 500 µm.

2. Matériau d'emballage selon la revendication 1,
dans lequel la couche de résine thermoplastique (C) est une couche de résine d'un polyamide aliphatique.

3. Matériau d'emballage selon la revendication 1 ou 2, la structure multicouche comprenant en outre :
une couche de polyamide aliphatique (D) différente de la couche de résine thermoplastique (C),
dans lequel la couche de copolymère d'éthylène-alcool vinylique (B) et la couche de polyamide aliphatique (D) sont adjacentes l'une à l'autre.

4. Matériau d'emballage selon la revendication 3,
dans lequel la couche de polyamide aliphatique (D) est une couche la plus extérieure.

5. Matériau d'emballage selon la revendication 4,
dans lequel la couche de polyamide aliphatique (D), la couche de copolymère d'éthylène-alcool vinylique (B), la couche de résine thermoplastique (C) et la couche de polyamide semi-aromatique (A) sont successivement stratifiées, donnant lieu à la structure multicouche comprenant la structure (D)/(B)/(C)/(A).

6. Matériau d'emballage selon l'une quelconque des revendications 1 à 5, la structure multicouche comprenant en outre :
une couche de résine de polyoléfine (E),
dans lequel la couche de résine de polyoléfine (E) est la couche la plus extérieure.

7. Matériau d'emballage selon l'une quelconque des revendications 1 à 6,
dans lequel la structure multicouche est une structure multicouche coextrudée.

8. Matériau d'emballage selon l'une quelconque des revendications 1 à 7,
dans lequel la structure multicouche est destinée à une utilisation dans un traitement de stérilisation thermique avec de l'eau chaude effectué de 60 °C à 150 °C pendant 1 minute à 150 minutes.

9. Matériau d'emballage selon l'une quelconque des revendications 1 à 8, comprenant en outre :
une couche de résine de polyoléfine (E) en tant que couche la plus intérieure en contact avec le contenu.

10. Matériau d'emballage selon l'une quelconque des revendications 1 à 9,
dans lequel la couche de polyamide semi-aromatique (A) est une couche plus proche du contenu que la couche de copolymère d'éthylène-alcool vinylique (B).

11. Utilisation du matériau d'emballage selon l'une quelconque des revendications 1 à 10 en tant que matériau d'emballage pour un traitement de stérilisation thermique avec de l'eau chaude effectué de 60 °C à 150 °C pendant 1 minute à 150 minutes.

12. Utilisation d'une structure multicouche en tant que sachet tenant debout,
la structure multicouche comprenant :
une couche de polyamide semi-aromatique (A) ;
une couche de copolymère d'éthylène-alcool vinylique (B) ; et
une couche de résine thermoplastique (C) entre la couche de polyamide semi-aromatique (A) et la couche de copolymère d'éthylène-alcool vinylique (B), la couche de résine thermoplastique (C) contenant une résine thermoplastique autre qu'un polyamide semi-aromatique et qu'un copolymère d'éthylène-alcool vinylique ;
dans laquelle la teneur en éthylène dans le copolymère d'éthylène-alcool vinylique est de 20 % en mole à 60 % en mole, mesurée conformément à ISO 14663 ;
dans laquelle le degré de saponification du composant d'ester vinylique dans le copolymère d'éthylène-alcool vinylique est de 90 % en mole à 100 % en mole, mesuré conformément à JIS K6726, dans laquelle le copolymère d'éthylène-alcool vinylique est une solution dissoute uniformément dans un solvant eau/méthanol présentant un rapport pondéral eau:méthanol de 9:1 ; et
dans laquelle l'épaisseur totale de la structure multicouche entière est de 10 µm à 500 µm.
